## Europäisches Patentamt
## European Patent Office
## Office européen des brevets

(11) Publication number: **0 005 603**
A1

(12) # EUROPEAN PATENT APPLICATION

(21) Application number: **79300764.2**

(22) Date of filing: **03.05.79**

(51) Int. Cl.²: **F 16 K 31/05**
**F 16 K 31/44**

(30) Priority: **12.05.78 US 905246**

(43) Date of publication of application:
**28.11.79 Bulletin 79/24**

(84) Designated Contracting States:
**DE FR GB**

(71) Applicant: MERCK & CO. INC.
126, East Lincoln Avenue
Rahway New Jersey 07065(US)

(72) Inventor: Petersen, Kenneth M.
3365 B Street
San Diego California 92102(US)

(72) Inventor: Soulier, John E.
2319 Cecelia Terrace
San Diego California 92110(US)

(74) Representative: Purvis, William Michael
Cameron et al,
D. Young & Co. 9&10 Staple Inn
London WC1V 7RD(GB)

(54) Valve operator.

(57) A valve operator whereby movement of linkage arms (20, 21, 24, 25), connected to a spring-loaded movable pressure plate (16) and to a valve stem support (32) opens and closes the valve diaphragm. A manual override clutch assembly (61, 59, 57a, 54, 50) disengages the drive means (53, 52) and permits manual operation of the valve.

Fig. 2.

1

"Valve operator"

The invention relates to a valve operator for a sliding stem valve.

The use of remotely controlled valve operators on various sliding stem valves is quite common in the process industry. For relatively small valves currently available direct acting and geared operators are satisfactory. When high seating and unseating forces are encountered, however, as in the case of large diaphragm and gate valves, currently available operators are generally very bulky and require excessive control air pressure if they are pneumatically operated. Electrically driven operators are generally very complex gear-driven units which require expensive special motors to give the high torques necessary at the end of the travel. In each of these cases, the result is a very expensive valve operator to do a relatively simple job.

According to the invention there is provided a valve operator for a sliding stem valve with a diaphragm of the valve connected to a valve stem comprising linkage arms connected to a spring-loaded movable pressure plate and to the valve stem and relatively movable to move the diaphragm between its open and its closed positions.

Such a valve operator can apply extremely high, controlled mechanical forces with relatively low power input. It can have positive positioning and be unaffected by pressure changes in the valved line. Manual override means can be included in the form of a manual override clutch assembly to disengage the mechanical drive means and permit manual operation of the valve. The valve operator can be lighter, more compact and more economical than previously proposed valve operators.

The invention is diagrammatically illustrated by way of example in the accompanying drawings, in which:-

Figure 1        is a perspective view of a valve operator according to the invention;

Figure 2        is a side elevation view taken on line 2-2 of Figure 1;

Figures 3 and 4  are side elevations taken on line 3-3 of Figure 1 wherein Figure 3 shows the valve in its closed position and Figure 4 shows the valve in its open position;  and

Figure 5        is a detail of a manual crank hub of the valve operator of Figures 1 to 4.

Referring to the drawings, a valve operator has a frame assembly formed from a bottom mounting plate 10, a top stationary pressure plate 11, vertical frame members 12, 13, 14 and a fourth vertical frame member (not shown) diagonally opposite the member 13. A movable pressure plate 16 is attached to the plate 11 by means of guide pins through rubber springs 70, 71, 72 and 73. Threaded ends 44, 45, 46 and 47 of the guide pins protrude through openings in the plate 11 and are secured by nuts 44a, 45a, 46a and 47a. A support bracket 17 is attached to the plate 16 by means of bolts 68 and 69 and nuts 68a and 69a. Upper linkage arms 19, 20, 21 and 22 are pivotally attached to the bracket 17 by pins 28 and 29. Lower linkage arms 23, 24, 25 and 26 are pivotally attached to a U-shaped bracket 18 by pins 30 and 31. A valve stem 32 is also attached to the bracket 18 by means of an upper nut 32a and a lower nut 32b.

A screw hub 39 with an attached sprocket 39a is integrally mounted on a threaded screw 40. The screw 40 has left-hand threads on one side of the hub 39 and right-hand threads on the other side of the hub 39. The screw 40 is threaded through pivot nuts 41 and 42. The upper linkage arms 19 and 20 and the lower linkage arms 23 and 24 are pivotally attached to the pivot nut 41 by means of a pin 43. Similarly, the upper linkage arms 21 and 22 and the lower linkage arms 25 and 26 are pivotally attached to the pivot nut 42 by a pin (not shown) corresponding to the pin 43. A main drive shaft 50 having a sprocket 51 is turned by a chain 52 driven by a motor 53. A second sprocket 33 mounted on a sleeve 55 is connected by a chain 34 to the sprocket 39a.

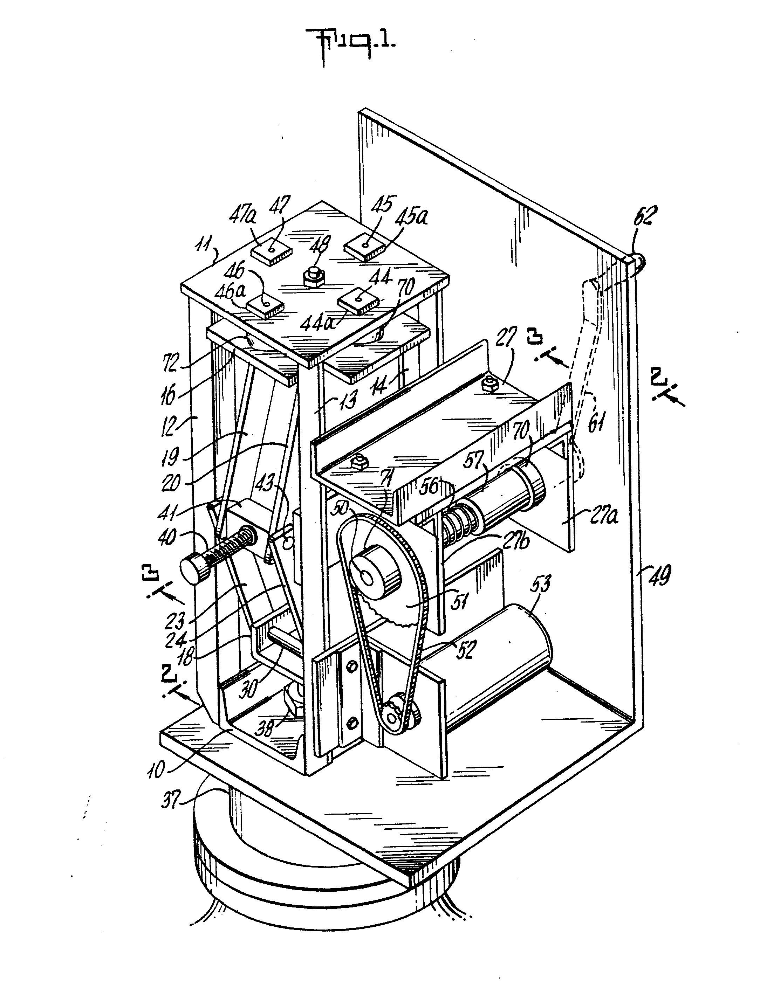

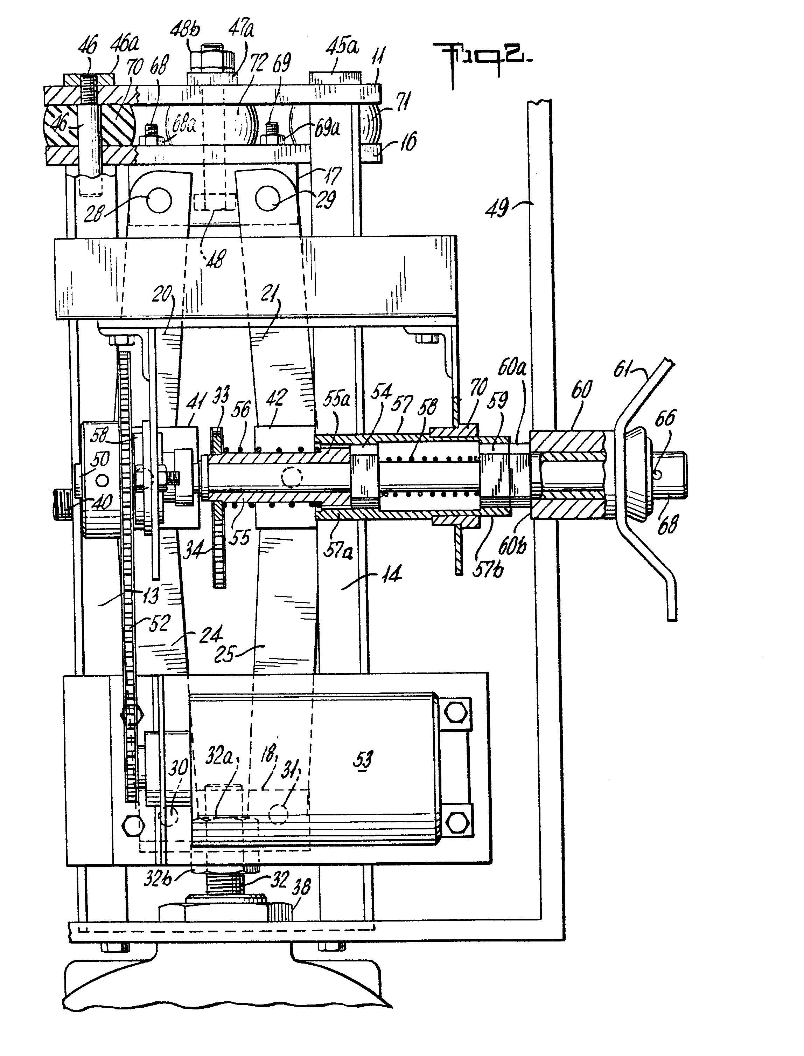

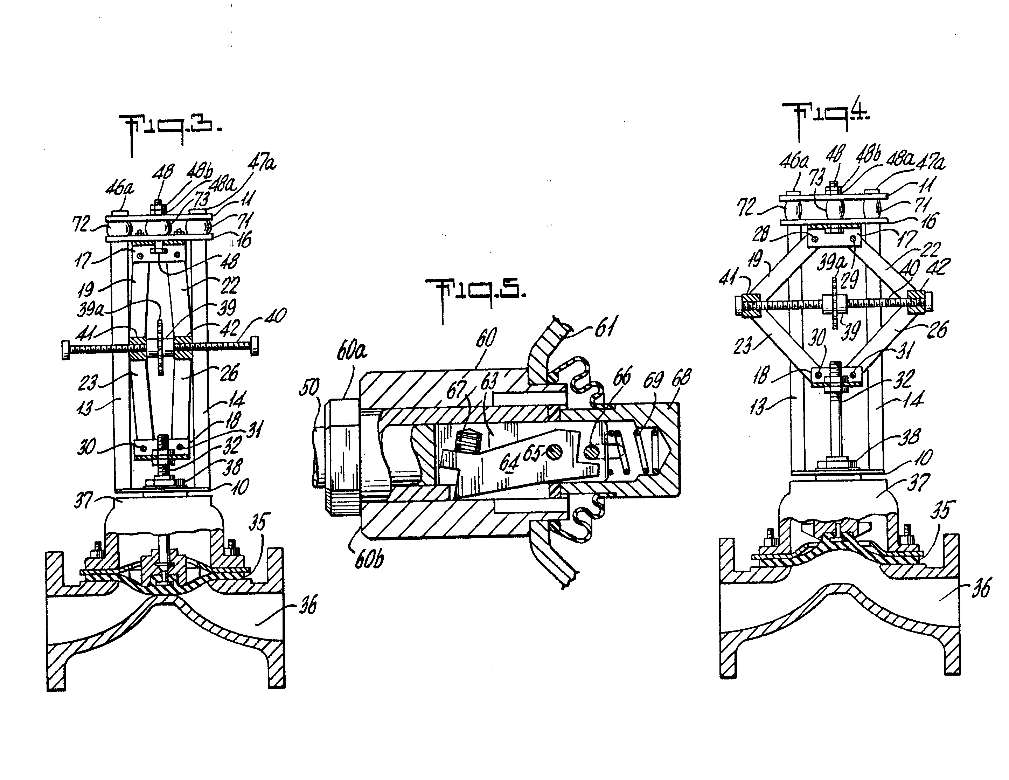

Figure 3 shows the valve in its closed position with a diaphragm 35 seated against a valve body 36. Rotation of the main drive shaft 50 rotates the sprocket 39a to turn the screw 40 and thereby spread apart the linkage arms. As the linkage arms spread, the bracket 18 is raised thereby lifting the diaphragm and opening the valve as shown in Figure 4. In this operation, the head of a bolt 48 which is disposed beneath the plate 16 acts as a stop to limit downward movement of the plate 16. In reverse operation the linkage arms are drawn toward the hub 39 to move the valve stem 32 down and seat the diaphragm 35 against the valve body 36. In this operation, the rubber springs 70, 71, 72 and 73 which surround the guide pins 44, 45, 46 and 47, respectively, limit the upward movement of the plate 16 and direct the force of the closing linkage arms downwardly to seat the diaphragm 35 against the valve body 36.

Before the valve stem 32 is attached to the bracket 18, a cover plate 49 having bottom opening (not shown) is fitted over a valve bonnet 37. Both of the plates 49 and 10 are secured to the bonnet 37 by means of a nut 38. A shaft mounting bracket 27 having downwardly projecting members 27a and 27b is welded to the frame assembly vertical frame members 13 and 14 so that a hole in each of the members 27a and 27b is in registration with a hole in the vertical member of the cover plate 49. A manual clutch override assembly is inserted through these holes through bushings 70 and 71. The manual override clutch assembly comprises the main drive shaft 50 having an hexagonal spline 54 pinned to the shaft; the sleeve 55 having a wider hexagonal end 55a fitted over the shaft 50 with a spring 56 fitted between the sprocket 33 and the wider end 55a of the sleeve 55 urging the sleeve 55 against the hexagonal spline 54; a sleeve 57 having splined end portions 57a and 57b and the hexagonal spline 54 urging a bushing 59 away from the hexagonal spline 54; a hub 60 and a crank means 61 fitted over the outer portion of the shaft 50; an innermost portion 60a of the hub 60 being a spline adapted to fit within an adjacent splined end 51b of the sleeve 57; and the crank means 61 having a handle 62.

The hub 60 is free wheeled when the shaft 50 is engaged by the chain 52 and the motor 53. Pushing the crank means 61 displaces the bushing 59 inwardly and moves the portion 60a into the splined end 57b of the sleeve 57 to a point where the flange 60b engages the end of the portion 57b of the sleeve 57. This causes the splined end 57a to move toward the sprocket 33 and away from the hexagonal spline 54 thus disengaging the shaft 50 from the motor 53 and the chain 52, while at the same time coupling the shaft 50 to the crank means 61 for manual operation. A latch 64 is mounted on a pin 65 within a slot 63 in the shaft 50. As the outer end of the hub 60 passes the inner end of the latch 64, a spring 67 pushes the latch 64 outwardly thus locking the hub 60 and preventing its return. A stop 66 limits the outward travel of the latch 64. A spring 69 maintains a release cap 68 in its original position as the hub 60 is pushed in. To disengage the manual override, the release cap 68 is pushed inwardly thereby returning the latch 64 to its original position and enabling the springs 58 and 55 to return the sleeves 55 and 57 to their original positions whereby the main drive shaft 50 is again engaged with the chain 52 and the motor 53.

5

CLAIMS

1.    A valve operator for a sliding stem valve with a diaphragm
of the valve connected to a valve stem comprising linkage arms
connected to a spring-loaded movable pressure plate and to the valve
stem and relatively movable to move the diaphragm between its open
and its closed positions.

2.    A valve operator according to claim 1, in which the linkage
arms comprise at least one upper and at least one lower linkage arm
and the valve operator includes means to provide controlled movement
of the linkage arms.

3.    A valve operator according to claim 1, wherein movement of
the linkage arms is controlled by a reversible actuating means, the
reversible actuating means being operable by either powered or
manual means.

4.    A valve operator according to claim 2, having at least
two sets of linkage arms.

5.    A valve operator according to claim 3, wherein the reversible
actuating means is a threaded actuating screw having right-hand and
left-hand screw threads.

6.    A valve operator according to claim 5, wherein the reversible actuating means is a power-driven main shaft connected through a sprocket mounted on a spline sleeve and chain connected to the threaded actuating screw.

7.    A valve operator according to claim 3 or claim 6, including an override clutch assembly to disengage the manual operating means during powered operation.

8.    A valve operator according to claim 3 or claim 6, including an override clutch assembly to disengage the powered operating means during manual operation.

9.    A valve operator according to claim 6, wherein the manual override clutch assembly comprises a splined hub and sleeve means mounted on the main drive shaft and to disengage the main drive shaft and engage the manual operating means simultaneously.

10.    A valve operator according to claim 9, wherein the manual override clutch assembly is provided with latch means to co-operate with the hub means to lock the shaft means in the manual operating position.

Fig.1.

0005603

Fig.2.

Fig.3.

Fig.5.

Fig.4.

**European Patent Office**

**EUROPEAN SEARCH REPORT**

| Category | Citation of document with indication, where appropriate, of relevant passages | Relevant to claim |
|---|---|---|
| | US - A - 3 515 367 (T. ZIAYLEK, JR)<br>* fig. 1,2 * | 1-4 |
| | FR - A - 1 206 168 (J. HOWDEN & COMPANY)<br>* page 3, left column, lines 12 to 21; fig. 1,2, pos. 9 * | 1-4 |
| | US - A - 2 759 369 (B.A. GINOCCHIO et al.)<br>* fig. 1 to 4; pos. 14 * | 1-4 |
| | US - A - 2 603 102 (J.C. HOBBS)<br>* fig. 1 to 3 * | 1-4 |
| | US - A - 2 319 842 (R.C. BENSON et al.)<br>* fig. 1 to 3 * | 1-3 |
| | US - A - 2 315 389 (R.C. BENSON et al.)<br>* fig. 2, pos. 37 * | 1-3 |
| A | DE - A - 2 025 300 (GULDE-REGELARMATUREN)<br>* fig. 1 to 3 * | 1 |
| | ./.. | |

**DOCUMENTS CONSIDERED TO BE RELEVANT**

**CLASSIFICATION OF THE APPLICATION (Int. Cl.³)**

F 16 K 31/05
F 16 K 31/44

**TECHNICAL FIELDS SEARCHED (Int.Cl.³)**

F 16 K 7/00
F 16 K 31/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| The present search report has been drawn up for all claims | | |
| Place of search | Date of completion of the search | Examiner |
| Berlin | 05-09-1979 | SCHLABBACH |

EPO Form 1503.1 06.78

0005603

European Patent
Office

**EUROPEAN SEARCH REPORT**

Application number

EP 79 300 764.2
- page 2 -

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | GB - A - 1 099 932 (DUNLOP) <br> * fig. 1 to 2 * | 1 | |
| A | US - A - 2 515 498 (E.P. DE CRAENE et al.) <br> * fig. 1 to 3 * | 1 | |
| A | US - A - 2 344 594 (C.W. BRYANT) <br> * fig. 1,2 * | 1 | |

TECHNICAL FIELDS SEARCHED (Int. Cl.³)

EPO Form 1503.2  06.78